(19) Europäisches Patentamt
European Patent Office
Office européen des brevets

(11) **EP 2 063 102 A2**

(12) **EUROPEAN PATENT APPLICATION**

(43) Date of publication:
27.05.2009 Bulletin 2009/22

(51) Int Cl.:
*F03B 13/06* (2006.01)  *F03B 17/00* (2006.01)

(21) Application number: 08016432.0

(22) Date of filing: 18.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 22.11.2007 IT TO20070839

(71) Applicant: Ponti, Giovanni
14053 Canelli (AT) (IT)

(72) Inventor: Ponti, Giovanni
14053 Canelli (AT) (IT)

(74) Representative: Aprà, Mario
Via Bertola 2
10121 Torino (IT)

(54) **Hydroelectric power plant and process for generation of electrical energy**

(57) A hydroelectric power plant comprises at least one bottom tank (A) and at least one top tank (B), between which there exists a waterfall according to a difference in level (H1), in which a corresponding turbine (T) operates, which converts the kinetic energy of the water into mechanical energy and, via an alternator, into electrical energy, whilst the water is discharged freely and/or by means of a diffuser, into said bottom tank (A).

According to the invention, at least one set of electric pumps (P) is supplied electrically by means of the electrical energy produced starting from said turbine (T) and pumps a volume of water ($m^3/s$) from said bottom tank (A) into said top tank (B).

*Fig. 1*

**Description**

The present invention relates to a hydroelectric power plant. The invention moreover relates to the process for production of electrical energy in said plant.

State of the art

The method currently adopted for obtaining electrical energy in hydroelectric power plants with flowing water or with tanks, water-storage basins, and the like (with low, medium or high waterfall), is to exploit the waterfall (kinetic energy) between the charging tank, set at the top, and the shaft of the turbine in the power plant, set at the bottom, said distance having a constant height H (expressed in metres). The kinetic energy of the water is converted into mechanical energy, and the mechanical energy, via the alternator, is then converted into electrical energy. This is the energy-conversion cycle according to the traditional system adopted in small-sized, medium-sized and large-sized hydroelectric power plants. The turbine discharges the processed water immediately downstream, and the discharged-processed water is no longer recovered in any way in the working cycle of the plant.

According to a first method, it is possible to have a high constant jump H (m) and a small constant flowrate Q ($m^3/s$), or else a low constant jump H (m) and a large constant flowrate Q ($m^3/s$), according to the amount of water that is available and the type of turbine that it is intended to use. The water passes through the turbine, yields its kinetic energy, and turns the blades of the turbine and the alternator connected thereto, which produces electricity. Once the water has passed through the turbine, it is immediately discharged downstream, for example into a river, and is no longer recovered.

Alternatively, a second method is employed, referred to as turbine-pump or pump-turbine, in which the equipment is reversible; i.e., if it turns in one direction, it functions as a turbine, and if it turns in the opposite direction, it functions as a pump.

With the first method described above, the kinetic energy of the water is exploited just once. In fact, the volume of water, after having been processed by the turbine, is immediately discharged into a river downstream and is no longer recovered in any way in the working cycle of the power plant.

With the second method, during the day, electrical energy is produced only for twelve hours (turbine phase) or according to the requirement. At night, the turbine is converted into a pump, and the water, which had descended during the day by gravity from the top basin to the bottom basin, so producing electrical energy, is pumped back up, for twelve hours or according to the requirement, from the bottom basin to the top basin, thus returning the water to the top basin so as to recover the water and restart the turbine phase during the day.

Broadly speaking, these are the known processes for producing electrical energy using water according to traditional hydroelectric systems. Consequently, the kinetic energy of the water is either exploited just once (first method) and immediately discharged downstream and no longer recovered, or else there is a continuous total exploitation, i.e., all round the clock (second method), of the kinetic energy of the water. According to the reversible pump-turbine method, the cost of transfer at night of the water to a higher point, i.e., from the bottom basin to the top basin, is more than offset by the fact that at night electrical energy costs much less than during the day; i.e., there is merely an economic advantage.

Technical problem

Considering the drawbacks of the aforementioned state of the art, the present invention intends to solve the extremely serious technical problem of pollution, which arises in thermoelectric and nuclear power plants. It moreover solves the problem of continuity and regularity in the production of electrical energy, which is not present in solar and wind-power plants. It also solves the problem of availability of the raw material.

With a view to achieving the above purpose, the present invention envisages a hydroelectric power plant and corresponding process for the production of electrical energy, as specified in the annexed claims.

Essence of the invention

The present invention envisages a hydroelectric power plant comprising at least one bottom tank (A) and at least one top tank (B), between which there exists a waterfall according to a difference in level (H1), in which a corresponding turbine (T) operates, which converts the kinetic energy of the water into mechanical energy and, via an alternator, into electrical energy, whilst the water is discharged freely and/or by means of a diffuser, into said bottom tank (A).

The above plant is characterized in that it further comprises at least one set of electric pumps (P), which are electrically supplied by means of the electrical energy produced starting from said turbine (T) and pump a volume of water ($m^3/s$) from said bottom tank (A) to said top tank (B), whilst from said top tank (B), through said turbine (T), substantially the same volume (same amount) of water ($m^3/s$), by gravity and/or by means of a diffuser, is processed by the turbine (T) and is discharged freely and/or by means of a diffuser into said bottom tank (A) so that a repetitive cycle (ABA) is executed, in which always substantially the same volume of water ($m^3/s$) is recycled at the same time and continuously. The possible higher energy requirement of said at least one set of electric pumps is supplied, when necessary, by external electric-power supply means (in themselves known).

The process for the production of electrical energy according to the invention is implemented in the aforementioned hydroelectric power plant, which comprises at least one bottom tank (A) and at least one top tank (B), between which there exists a waterfall according to a difference in level (H1), in which a corresponding turbine (T) operates, which converts the kinetic energy of the water into mechanical energy and, via an alternator, into electrical energy, whilst the water is discharged freely and/or by means of a diffuser, into said bottom tank (A).

Said process is characterized in that at least one set of electric pumps (P) is electrically supplied by means of the electrical energy produced starting from said turbine (T) and pumps a volume of water ($m^3/s$) from said bottom tank (A) to said top tank (B), whilst from the same top tank (B), through said turbine (T), substantially the same volume (same amount) of water ($m^3/s$) by gravity and/or by means of a diffuser is processed by said turbine (T) and discharged freely and/or by means of a diffuser into said bottom tank (A) so that a repetitive cycle (ABA) is executed, in which there is always substantially recycled the same volume of water ($m^3/s$), which is processed simultaneously and continuously by the turbine (T) and discharged, by gravity, from the top tank (B) to the bottom tank (A), whilst simultaneously and continuously the same volume of water ($m^3/s$) is pumped from the bottom tank (A) into the top tank (B), according to a renewable continuous-loop cycle (ABA). The possible higher energy requirement of said at least one set of electric pumps is supplied, when necessary, by external electric-power supply means (in themselves known).

In addition, the process according to the invention is characterized in that said renewable continuous-loop cycle, at least in a small-sized plant and during at least one step of the operating cycle, is performed in a self-supplying way, according to the following energy relation:

$$QuEEP > QuEEC \qquad\qquad [1]$$

where:

QuEEP is the amount of electrical energy produced, and
QuEEC is the amount of electrical energy consumed,
according to the following complementary measurements:

$$H = m, \; P = m^3/s, \; T = m^3/s, \; P = T.$$

Principal advantages of the invention

The present invention uses, as raw material, water (from the sea, a lake, a river, a well), which is a non-polluting energy source, and presents the following advantages:

1°) a practically inexhaustible source of raw material;
2°) constant yield in operation, unlike solar and wind power, which are unable to guarantee a regular and continuous emission and availability of sunlight and wind, respectively. Furthermore, with solar and wind power there is a very considerable environmental impact. A recycling hydroelectric power plant can run all round the clock. It can be regulated and controlled, a feature that is impossible with solar plants, because sunlight is available only during the day, and wind-power plants, on account of the variable intensity of the wind, given that they depend upon the climatic variations of the weather;
3°) solution of the extremely serious problems caused by pollution and the dangers created by waste - residue of solid fuels, liquid fuels, and gas and/or radioactive waste; emission of carbon dioxide.
In summary, the present invention solves the problems of pollution, of hazards due to the plants themselves, and of availability of raw materials. It is also obvious and by now taken for granted that in the near future solid fuels, liquid fuels, and gas are destined to run out;
4°) self-supply of the plant according to the invention, at least in a plant of small size and during at least one step of the operating cycle, since, provided that the complementary measurements H = m, P = $m^3/s$, T = $m^3/s$, P = T, as calculated by the inventor, are respected, the result expressed by the relation

QuEEP > QuEEC

is ensured, i.e., the amount of electrical energy produced by the turbine T is greater than the amount of electrical energy consumed by the pump P.

Advantages of the invention as compared to the prior art

It is not possible, in traditional hydroelectric power plants currently functioning to arrive at the same results that can be achieved with the present invention since traditional continuously operating systems are able to exploit only once the kinetic energy of the water; i.e., once the volume of water has passed through the turbine, it is immediately discharged downstream and no longer exploited.

The plant according to the present invention enables a simultaneous and continuous recycling of the same volume of water (as in a closed circuit).

The present invention affords the following advantageous features:

- it does not involve the use of large basins located at high levels, large dams, dams with flowing water, or reversible turbine-pump/pump-turbine systems. The new-concept process/invention is based upon uninterrupted (round-the-clock) exploitation, or exploitation according to the requirement, of the kinetic energy (renewable continuous-loop cycle) of the same volume of water ($m^3$/s), which is simultaneously and continuously pumped, i.e., discharged, re-pumped, discharged and so on.

Drawings

The present invention will emerge more clearly from the ensuing detailed description, with reference to the attached drawing, which is provided purely by way of example and illustrates schematically, in vertical cross sectional view, different examples of embodiment of the hydroelectric power plant according to the invention, wherein:

- Figure 1 illustrates a hydroelectric power plant with two tanks that are cascaded together with constant recycling of the same volume of water and with intake of primary water into the underlying feed tank from a groundwater table;
- Figure 2 shows a plant similar to that of Figure 1, but with intake of primary water from a well, for example an artesian well;
- Figures 3, 4 and 5 show two variants of the hydroelectric power plant of Figure 1, in which the top tank is variously staggered, in the horizontal plane, with respect to the bottom one;
- Figure 6 illustrates a variant of the hydroelectric power plant according to the invention with three tanks set cascaded to one another, of which the top two are operatively set in series with respect to one another, the ensemble being installed underground with intake of primary water from a groundwater table;
- Figure 7 illustrates another variant of the hydroelectric power plant according to the invention with five tanks, of which one underlying (a feed tank), with intake of primary water from a groundwater table, and four overlying ones (charging tanks) operatively set in parallel;
- Figure 8 shows a further variant embodiment of the hydroelectric power plant according to the invention with one underlying tank (feed tank), with intake of primary water from a groundwater table, and two overlying tanks (charging tanks) set in tower fashion operatively set in series, with a cascade system degrading in stepwise fashion from the top down;
- Figure 9 illustrates a modification of the plant of Figure 8, where the intake of primary water occurs both from a groundwater table and from an artesian well;
- Figure 10 illustrates yet another variant embodiment of the hydroelectric power plant according to the invention with an underlying tank (feed tank), with intake of primary water from a groundwater table, and two overlying double tanks (charging tanks) set in castelet fashion and in pairs operatively connected in series and in parallel with respect to one another;
- Figure 11 also shows a further variant embodiment of the hydroelectric power plant according to the invention with an underlying (feed) tank, with intake of primary water from a groundwater table, and three overlying (charging) tanks set in tower fashion operatively in series, with a cascade system degrading stepwise from top down; and
- Figure 12 shows a modification of the plant of Figure 11, in which the tanks overlying the feed tank are four with a tower arrangement, operatively set in series, with a cascade system degrading stepwise from top down.

Detailed description of some examples of embodiments of the invention

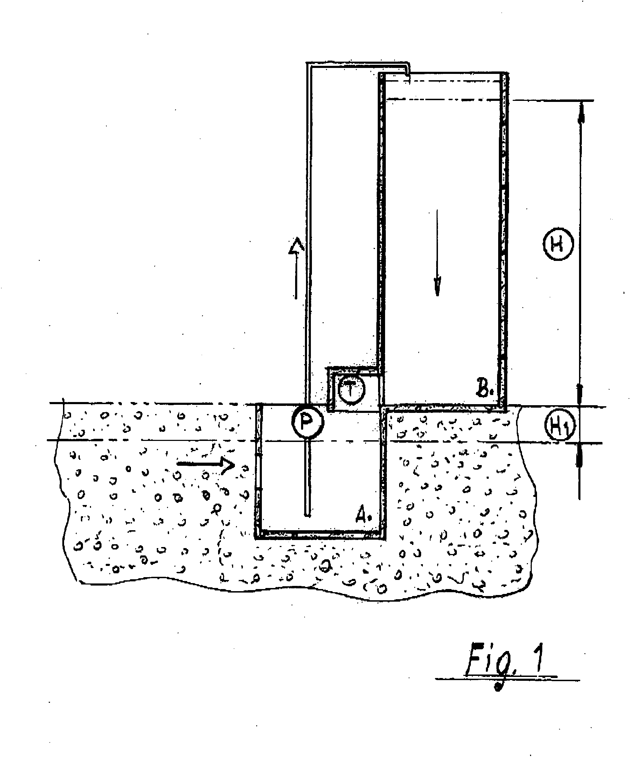

The hydroelectric power plant according to Figures 1, 3, 4 and 5

With reference to Figure 1 of drawings, in the hydroelectric power plant according to the invention, with a set of electric pumps P submerged in an artesian well, a volume of water ($m^3$/s) is pumped, from a bottom tank A, set in the ground, to a top tank B set above the ground and resting on the ground. From the top tank B, through a turbine T, the same volume (amount) of water ($m^3$/s), by gravity and/or by means of a diffuser, is processed by the turbine T and discharged freely and/or by means of a diffuser, into the bottom tank A. The electrical energy produced by the turbine T supplies the set of electric pumps P. The repetitive cycle ABA-ABA-ABA and so on is run. In brief, there is substantially recycled always the same volume of water ($m^3$/s) that is pumped by the set of electric pumps P, from the bottom upwards, i.e., from A to B. The same volume of water ($m^3$/s) is processed simultaneously and continuously by the turbine T and discharged, by gravity, from above downwards, from the charging tank B to the feed tank A. Hence, there is simultaneously and continuously resumed the continuous cycle that pumps from A to B and discharges from B to A. The cycle ABA is a renewable continuous-loop cycle.

The plant according to the invention, at least in a small-sized plant and during at least one step of the operating cycle, is thus able to supply itself and, respecting the complementary measurements: H = n P = $m^3$/s, T = $m^3$/s, P = T, calculated by the inventor, according to the following energy relation

$$QuEEP > QuEEC$$

$$[1]$$

where:

QuEEP is the amount of electrical energy produced,
QuEEC is the amount of electrical energy consumed,
it is possible to obtain that the amount of electrical energy produced by the turbine T is greater than the amount of electrical energy consumed by the pump P.

This is the essence of the present invention, for example in a plant with two tanks according to Figure 1, where substantially always the same volume of water is recycled.

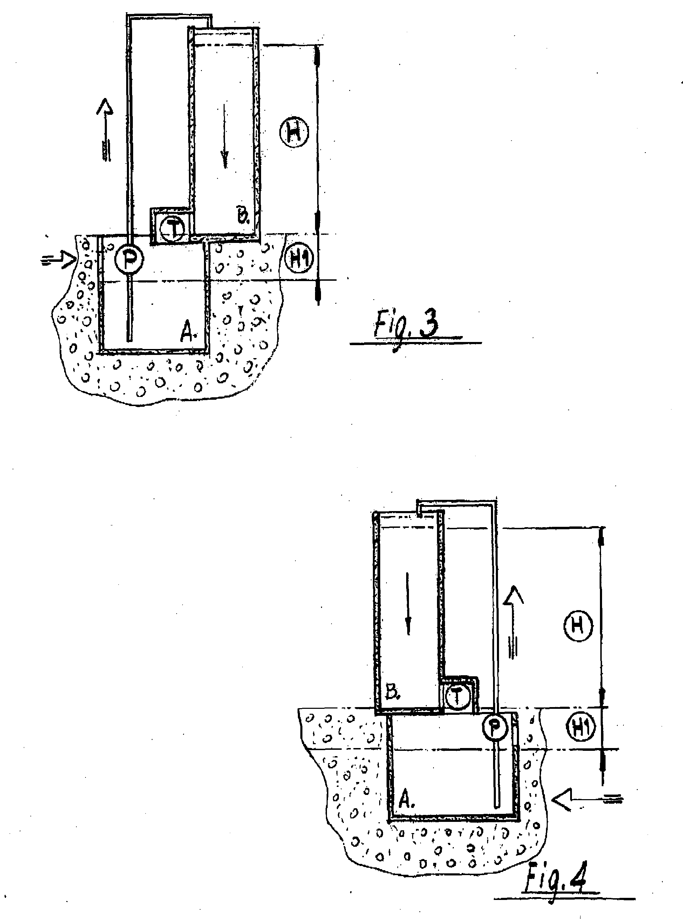

The description provided above can also apply to Figures 3, 4 and 5, which, however, illustrate a plant that is more compact in its horizontal development, as a result of partial superposition of the top tank B with respect to the bottom tank A.

As regards the validity of the energy relation [1], reference may be made to the following observations based upon "Dispense per il corso di "Tecnologie delle Energie Rinnovabili - L'Energia Idraulica"", Università degli Studi di Cagliari - Dipartimento di Ingegneria Meccanica, Sect. 3, pp. 8-9:

"... the conversion of thermal energy into mechanical energy is necessarily subject to the limits set forth by the second law of thermodynamics; the same does not occur as regards conversion of pressure energy and kinetic energy in a hydraulic turbine.... As a whole, by virtue of the absence of the thermodynamic cycle, the global efficiency of a hydroelectric power plant is generally much higher than the global efficiency of a thermal-motor plant".

As emerges from the foregoing example, the present invention is based upon the following main structural and functional characteristics:

-     Water is a non-polluting raw material, which is readily available. The plant can be built in any place where water is available even in modest amounts. It is obvious that when there is no longer any water, life on Earth will come to an end.
-     Materials used: tanks made of reinforced concrete and/or metal; turbines and pumps are equipment that has been available for over a century and can hence provide widest possible and unlimited guarantees in terms of safety, duration, functionality, running, maintenance, plant management, repairs.
-     New plants: the new power plants are easy to build, have a low environmental impact and can be built in a short time.
-     Modularity: in the plant according to the invention modules can be created for increasing the production of electrical energy. Instead, with traditional hydroelectric plants and systems it is not possible to proceed in a modular way.
-     Continuity of operation: the present invention can work all round the clock and throughout the year or according to the requirements. It is uneffected by climatic variations, as are wind and solar power plants. Hence there are no interruptions in operation (clearly, except for the times required for maintenance operations).

- Maintenance is minimal since, by using always substantially the same volume of water there are very few lime deposits either on the turbine blades or on the blades of the electric pumps and very few deposits both in the feed tank and in the charging tank. By exploiting always the same amount of water, the cost and the consumption of raw material becomes extremely low, even negligible.
- Minimal vital outflow (MVO): the present process/invention solves the problem of MVO of rivers. There is a minimal need for topping-up with water in the cycle according to the invention for leakages, evaporation; consumption is minimal.

The temperature of the water remains constant during each operating cycle.

Variants

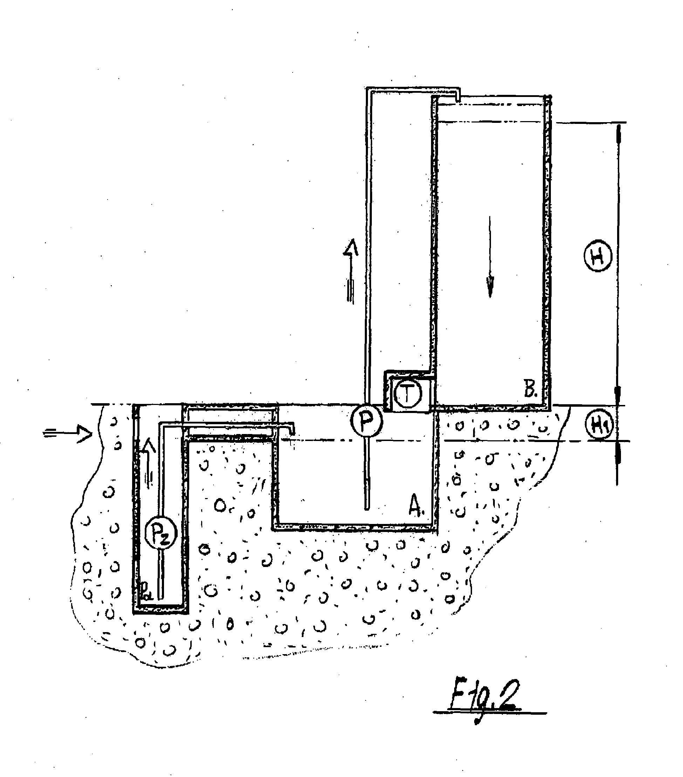

The hydroelectric wer plant according to Figure 2

The supply of primary water to the feed tank A is provided starting from an artesian well Pa by means of an electric pump Pz, which is also electrically supplied starting from the turbine T. For the rest, the reader is referred to the description corresponding to Figure 1.

Also in the case of this hydroelectric power plant, the energy relation [1] specified above, according to the calculations made by the inventor, applies.

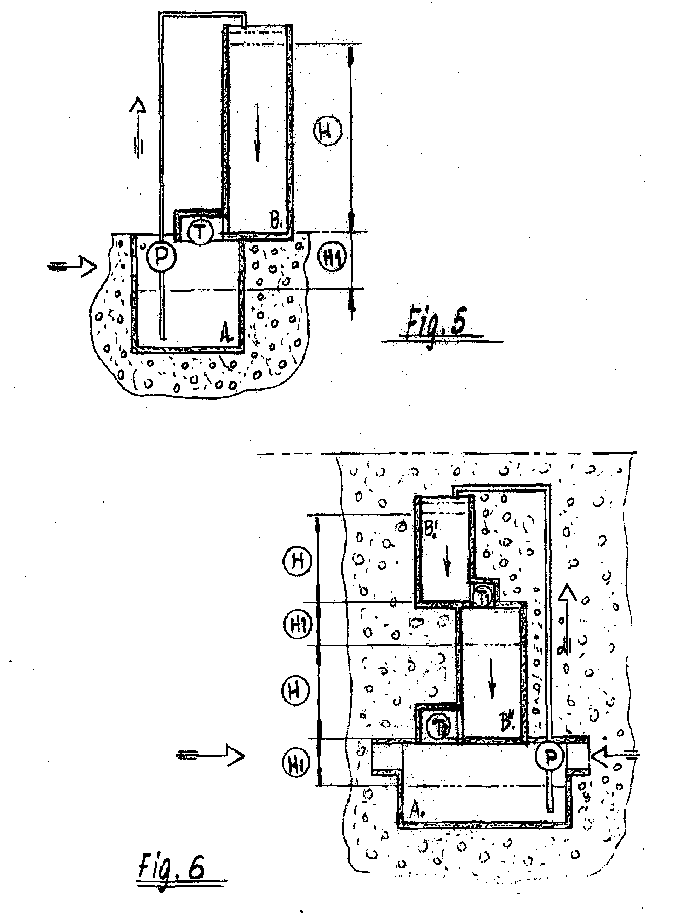

The hydroelectric power plant according to Figure 6

The hydroelectric power plant according to this variant comprises three tanks that are cascaded with respect to one another, all of which are laid underground with intake of primary water from a groundwater table for the bottom tank (feed tank) A. Set above these are two charging tanks B' and B", which are set on top of one another operatively in series.

A set of electric pumps P submersed in the feed tank A pump a volume of water expressed in $m^3/s$ to the top tank B'. From the top charging tank B', through a first turbine T1, the same volume (amount) of water ($m^3/s$) is discharged by gravity and/or by means of a diffuser into the underlying charging tank B" and is further processed by a second turbine T2 and discharged freely and/or by means of a diffuser into the bottom tank A. The electrical energy produced by the turbines T1 and T2 supplies the set of electric pumps P. The repetitive cycle AB'B"A is run continuously. In summary, there is substantially recycled always the same volume of water ($m^3/s$), which is pumped from the set of electric pumps P from below upwards, from A to B'. The same volume of water ($m^3/s$) is processed simultaneously and continuously by the turbine T1 and discharged, by gravity, from above downwards, from the first charging tank B' to the second underlying charging tank B" and is processed simultaneously and continuously by the turbine T2 and discharged, by gravity, from above downwards, into the feed tank A. Then, the continuous cycle, which pumps from A to B' and discharges from B' to B" and then to A, resumes simultaneously and continuously according to a renewable continuous-loop cycle.

Also in this case the relation [1] given above applies.

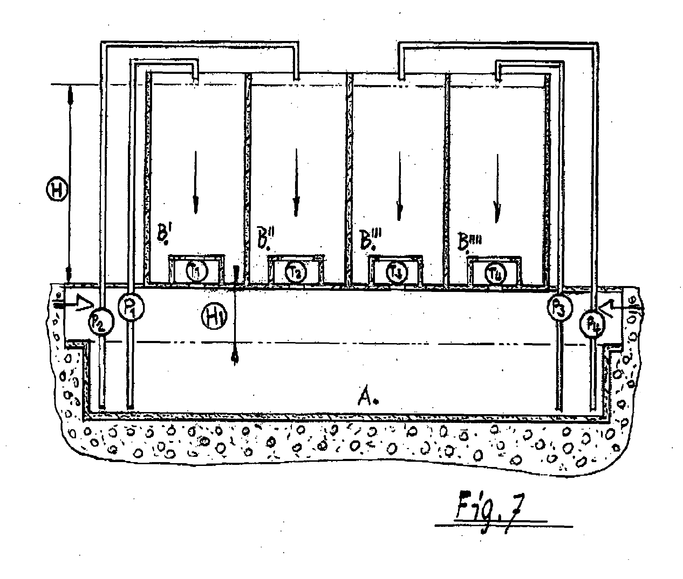

The hydroelectric power plant according to Figure 7

The hydroelectric power plant according to this variant comprises a bottom feed tank A, laid underground and supplied by a groundwater table. Set on top, above the ground, are four charging tanks, B', B", B"' and B"", which are set alongside one another operatively in parallel with respect to one another. Four distinct sets of electric pumps, P1, P2, P3, P4, submersed in the feed tank A pump a volume of water in $m^3/s$ to the respective top tank B', B", B"' and B"". From each top charging tank B', B", H"' and B"" substantially the same volume (same amount) of water ($m^3/s$) is discharged by gravity and/or by means of a diffuser into the underlying feed tank A and is processed through a corresponding turbine T1, T2, T3, T4. The electrical energy produced by the turbines T1, T2, T3 and T4 supplies the sets of electric pumps P1, P2, P3, P4. The repetitive cycle AB'B"B"'B""A is run through continuously. In summary, there is always substantially recycled the same volume of water ($m^3/s$), which is pumped from the set of electric pumps P1, P2, P3, P4, from below upwards, from A to B' B" B"' B"". The same volume of water ($m^3/s$) is processed simultaneously and continuously by the turbines T1, T2, T3, T4 and discharged, by gravity, from above downwards, from the four charging tanks into the underlying feed tank. Hence, simultaneously and continuously the continuous cycle that pumps water from A to B'B"B"'B"" and discharges it from B'B"B"'B"" to A is repeated, according to a renewable continuous-loop cycle.

Also in this case the relation [1] given above applies.

The further variants of the invention

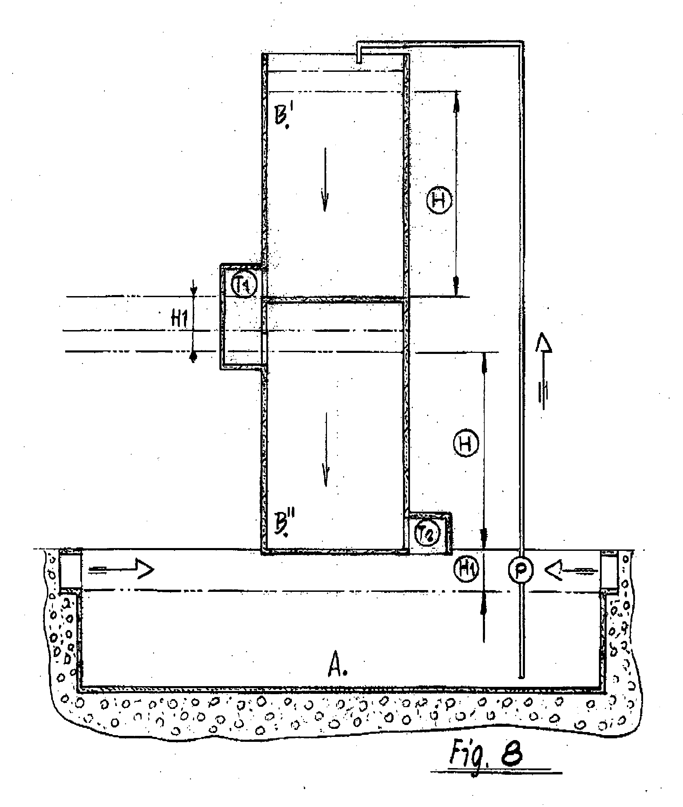

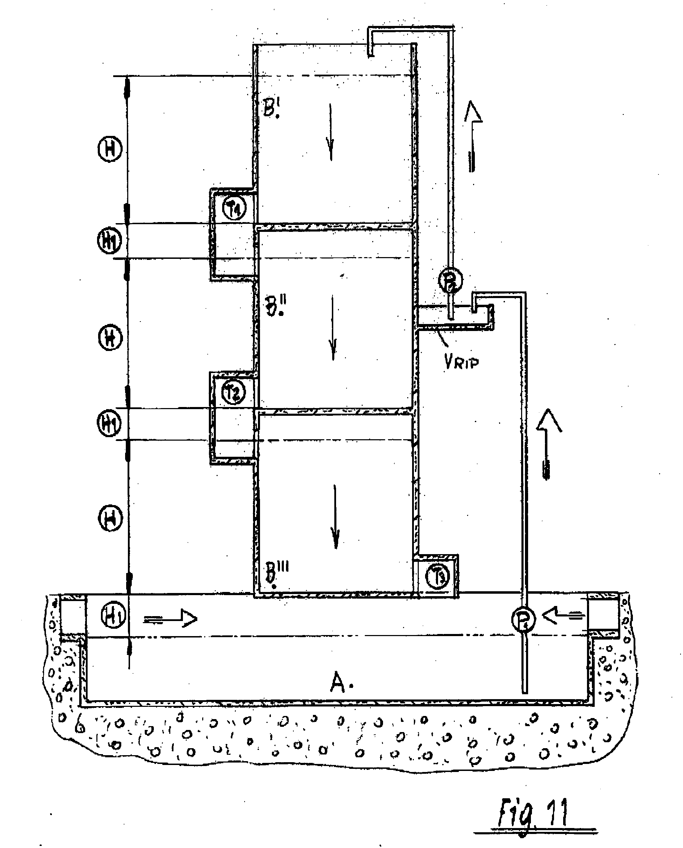

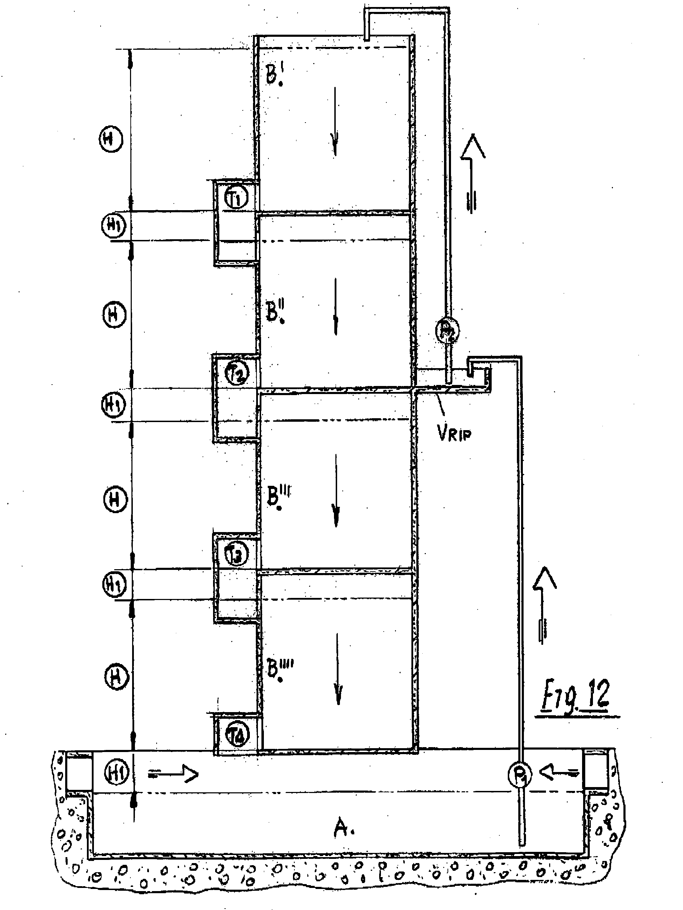

With reference to Figure 8 and the following figures, illustrated in the drawing are variants, where the same volume of water m$^3$/s is exploited two or more times: a cascade system, or else tanks set in series, in parallel, on the flat. In the new-concept invention, as further variant, to raise a volume of water, in a system with more than two tanks set above one another in cascaded fashion, a recovery tank Vrip is provided (see Figures 11 and 12), the aim being to solve the problem of the head of the electric pump and exploit a number of times the kinetic energy from the same volume of water.

The hydroelectric power plant according to Figure 8

In this variant embodiment, the hydroelectric power plant according to the invention has an underlying (feed) tank A, with intake of primary water from a groundwater table, and two overlying (charging) tanks B', B" set operatively in series to one another and in tower fashion, with stepwise cascade system degrading from above downwards.
This plant has substantially the same structure and the same operation as that illustrated in Figure 6, to which the reader is consequently referred.

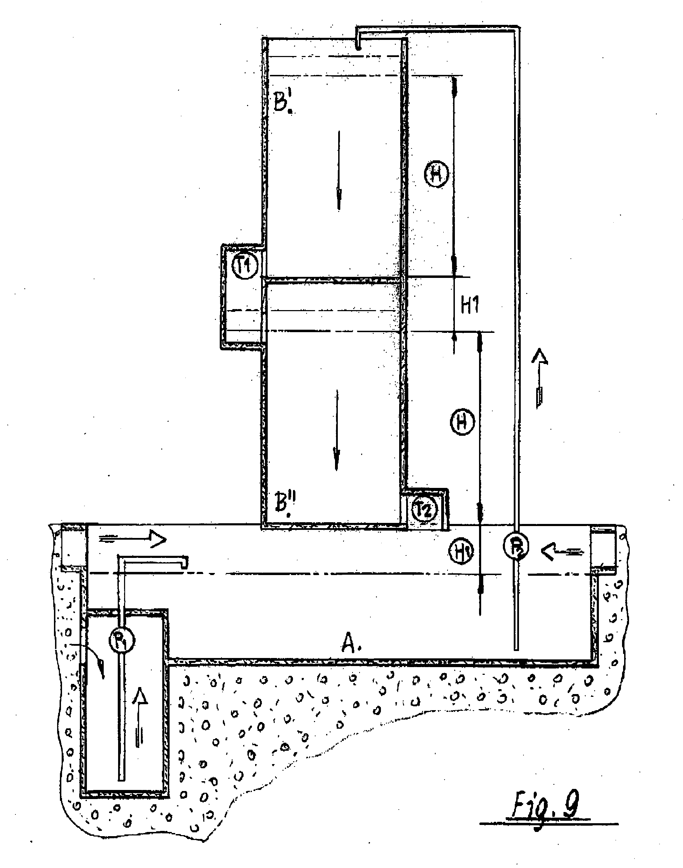

The hydroelectric power plant according to Figure 9

This embodiment is substantially similar to what is illustrated with reference to Figure 8. It differs in that the intake of primary water occurs from a groundwater table and from an artesian well. A further set of electric pumps P1 are then provided for supplying the bottom (feed) tank A with water from a well. Otherwise, what has been said regarding the foregoing description applies also in this case.

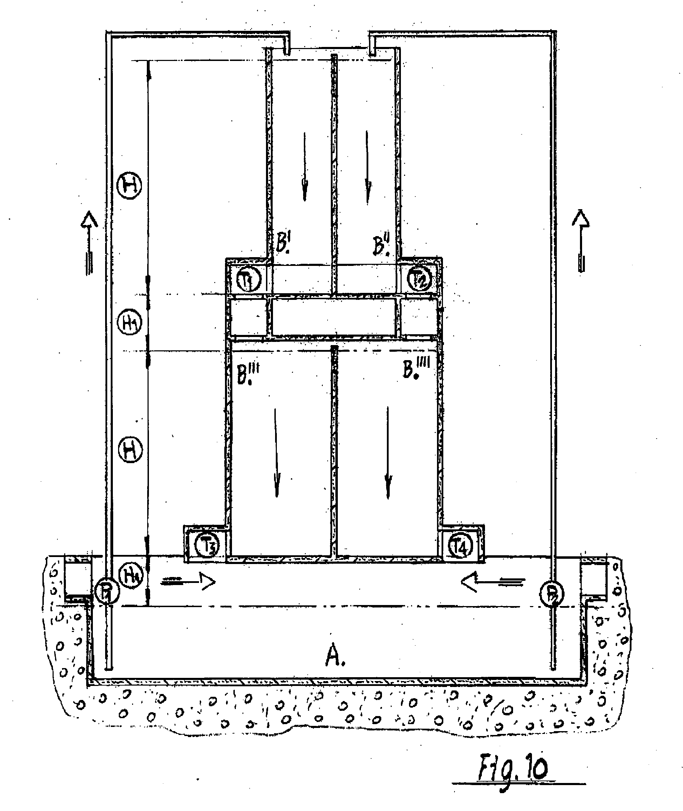

The hydroelectric power plant according to Figure 10

In this variant embodiment of the hydroelectric power plant according to the invention, there is an underlying (feed) tank A laid underground, with intake of primary water from a groundwater table, two overlying double (charging) tanks above the ground, set on top of one another in castelet fashion B', B" and B''', B'''', which are set in pairs operatively in series with respect to one another B'/B''' and B"/B'''' and in parallel with respect to one another B'/B" and B'''/B''''.
Given the cascaded arrangement of the charging tanks set on top of one another in pairs in series (B'/B''' and B"/B''''), each pair of said tanks is supplied, starting from the underlying feed tank A, by a respective set of electric pumps P1 and P2.
Considering each pair of tanks set on top of one another in series, the water supplied to the top tank B', B" is processed and discharged, via a first respective turbine T1, T2, into the underlying charging tank B''', H''''. From here, substantially the same amount/volume of water is processed and discharged, via a second respective turbine T3, T4 into the underlying feed tank A.
Then, simultaneously and continuously the continuous cycle that pumps water from A to B' B" and discharges it from B'B" to B'''B'''' to A is repeated according to a renewable continuous-loop cycle.
Also in this case, the relation [1] given above applies.

The hydroelectric power plant according to Figure 11

This plant is substantially similar to that illustrated with reference to Figure 8. It differs therefrom in so far as the stacking in tower fashion comprises in this case three charging tanks, set operatively in series, namely, B', B" and B'''.
Each charging tank supplies a respective turbine T1, T2, T3 with operation similar to what has been explained with reference to the plant according to Figure 6, but with a triple cascade: from B' to B" with the intermediary of the turbine T1, from B" to B''' with the intermediary of the turbine T2, and from B''' to A with the intermediary of the turbine T3.
It should, however, be noted that, given the difference in level between the feed tank A and the top charging tank B', to solve the problem of the head of the electric pump, there is provided a recovery tank Vrip, which is set at the level of the intermediate charging tank B" and is supplied continuously with water from the feed tank A via a first set of electric pumps P1, whilst said recovery tank supplies continuously with water said top charging tank B' by means of a second set of electric pumps P2.
Otherwise, the reader is referred to the structural and functional description of the plant, for example, according to Figures 6 and 8.

The hydroelectric power plant according to Figure 12

This embodiment is altogether similar to the plant according to Figure 11, with the difference that the tower comprises in this case four charging tanks, set operatively in series, namely, B', B", B''' and B''''. Accordingly, four turbines T1, T2, T3 and T4 are provided, which operate on the respective four waterfalls from one tank to another and of which the last leads from the bottom charging tank B'''' to the feed tank A, supplied with intake of primary water from a groundwater table.

Also in this case, given the difference in level between the feed tank A and the top charging tank B', to solve the problem of the head of the electric pump, there is provided a recovery tank Vrip, which is set at the level of the intermediate charging tank B" and is supplied continuously with water from the feed tank A via a first set of electric pumps P1, whilst said recovery tank supplies continuously with water said top charging tank B' by means of a second set of electric pumps P2.

Otherwise, the same considerations made in the previous point apply also here.

In the various figures of the attached drawings, denoted by HI is the difference in level between the free surface of the water in a bottom tank and the bottom of the top tank immediately overlying it and that measures the waterfall existing between said tanks, in which a corresponding turbine operates, which converts the kinetic energy of the water into mechanical energy. Said mechanical energy, via an alternator in itself well known (and not illustrated in the drawing), is then converted into electrical energy.

The process according to the invention is implemented in a modular plant for increasing the production of electricity.

By making modules, the production of electrical energy is increased. A turbine with a set of electric pumps produces X. Two turbines with two sets of electric pumps produces 2X. Three turbines with three sets of electric pumps produces 3X, and so on. The volume of water (Figure 1) is exploited once per cycle, simultaneously, continuously, as a closed circuit. In the simply cascaded plants (see, for example, Figure 8), the same volume of water is exploited approximately twice per cycle. In the solution of Figure 11, the same volume of water is exploited approximately three times per cycle. In the solution of Figure 12, the same volume of water is exploited approximately four times per cycle, and so on. In the cascade process/invention, the same volume of water, falling from one tank to another, is exploited, processed, and discharged a number of times, simultaneously and continuously as a closed circuit.

In the cascade system (see Figure 8 onwards), the overlying charging tank also becomes a feed tank for the underlying tank.

In general, the amount of water ($m^3/s$) that enters from above from a charging tank B, B', B", B''', B'''' is the same as the amount of water ($m^3/s$) that is processed and discharged from the bottom of the same tank, simultaneously and continuously.

However, in practice, the volume of water ($m^3/s$) pumped by the pumping means P is greater by an extremely small percentage amount, ranging from 1.5% to 2.0%, than the volume of water ($m^3/s$) processed and discharged by the turbine means T so that the water head ( H in metres) on the turbine means is constant, whilst any possible small surplus between the functional values of said means P, T are regulated and compensated for by an overflow system that sends by gravity from the top tank B the minimal surpluses back into the bottom tank A so that the system remains in equilibrium and the levels in said tanks A, B are constant, with a water head (H in metres) that is always regular and constant on the turbine means T.

It will be noted that both the basic two-tank system and the cascade system, with the method of the overflow from one tank to another, keeps both the feed tank and the charging tank/tanks full and at a constant level ( H in metres). There is just one feed tank A laid underground (supplied by the sea, a lake, a river, a well), whereas there may even be several charging tanks above the ground B, B' , B", .... Only in the case of the cascade process/arrangement, does the overlying charging tank become a feed tank for the underlying tank.

The process according to the invention, at least in a plant of small size and during at least one step of the operating cycle, is carried out in a self-supplying way provided that the three functional parameters H = m, P = $m^3/s$, T = $m^3/s$, P = T are in perfect equilibrium with respect to one another.

Of course, P1 = P2 = P3 = P4 and T1 = T2 = T3 = T4, and so forth, where P1 = T1, P2 = T2 and so forth, and where we always have P = = T ($m^3/s$) P1 + P2 + P3 + P4 = T1 + T2 + T3 + T4 and so forth. The amount of water ($m^3/s$) pumped by the pump P is always equal to the amount of water ($m^3/s$) processed and discharged by the turbine T.

An example of calculation corresponding to the plant according to the invention

P = 6.3 $m^3/s$ = 6300 1/s; P = T; where T is a 190-r.p. m Kaplan turbine of the bulb type, connected to a conical r. p m multiplier for coupling with the alternator, the flywheel, and other accompanying accessories necessary for the system The plant produces approximately 9 MW/h = 9000 kW/h. To send 6.3 $m^3/s$ of water into the top tank B four 1600-1/s electric pumps are necessary, for a total of 6400 l/s. Each pump absorbs 345 kW/h for a total of 4 x 345 = 1380 kW/h absorbed. QuEEP = 9000 kW/h produced by the turbine T. QuEEC = 1380 kW/h absorbed by the pump P. Hence, there remains a net residue of 9000 - 1380 = 7620 kW/h to be sent into the grid. Consequently, the system supplies itself. For example, in Italy a traditional flowing-water hydroelectric plant, i.e., with a process that does not recycle the same volume of water, is currently in use. Once the volume of water has passed through the turbine, it is immediately discharged downstream into a river and no longer recovered. It is a plant the turbine of which processes 6.2 $m^3$/s. This type of flowing-water plant closely approaches the calculations made by the inventor and provides sufficient backing for the practical operation of the new invention.

It will be noted that since the new invention regards a hydroelectric power plant, it can be started and restarted by simply starting the turbine for a maximum of 15-20 minutes, a manoeuvre that is not possible with other plants.

If, in the near future, there is a considerable improvement in the technical and mechanical performance of turbines and electric pumps, the principle of QuEEP greater than QuEEC may be applied, not only to small-sized hydroelectric power plants, but also to medium-sized and large-sized hydroelectric plants, once again applying the measurements H = m, P = $m^3$/s, T = $m^3$/s and where always P = T in equilibrium with respect to one another.

**Claims**

1. A hydroelectric power plant comprising at least one bottom tank (A) and at least one top tank (B), between which there exists a waterfall according to a difference in level (H1), wherein a corresponding turbine (T) operates, which converts the kinetic energy of the water into mechanical energy and, via an alternator, into electrical energy, whilst the water is discharged freely and/or by means of a diffuser, into said bottom tank (A),
said hydroelectric power plant being **characterized in that** it moreover comprises at least one set of electric pumps (P), which is electrically supplied by means of the electrical energy produced starting from said turbine (T) and pumps a volume of water ($m^3$/s) from said bottom tank (A) to said top tank (B), whilst from the same top tank (B), through said turbine (T), substantially the same volume (same amount) of water ($m^3$/s) by gravity and/or by means of a diffuser is processed by the turbine (T) and discharged freely and/or by means of a diffuser into said bottom tank (A) so that a repetitive cycle (ABA) is run, in which there is recycled simultaneously and continuously always substantially the same volume of water ($m^3$/s) and the same amount of water ($m^3$/s), whilst any possible higher energy requirement of said at least one set of electric pumps is supplied, when necessary, by external means of electric-power supply.

2. The plant according to Claim 1, **characterized in that** it comprises a plurality of top tanks (B, B', B", B''', B""), each of which overlies a respective bottom tank (A, B, B", B''', B"") with which it communicates hydraulically by means of a respective waterfall (H1) and **in that** set in said respective waterfall is a corresponding turbine (T, T1, T2, T3, T4), which converts the kinetic energy of the water into mechanical energy and, via an alternator, into electrical energy, whilst the water is discharged freely and/or by means of a diffuser, into said bottom tank (A, B, B", B''', B"").

3. The plant according to Claim 2, **characterized in that** it comprises two water tanks (A, B) that are cascaded to enable constant recycling of substantially the same volume of water and with intake of primary water into the underlying tank from a groundwater table and/or the sea, a lake, a river, and/or from an artesian well (Figures 1, 2, 3, 4, 5).

4. The plant according to Claim 2, **characterized in that** it comprises three water tanks (A, B', B") that are cascaded with respect to one another, of which a bottom portion is provided with intake of primary water from a groundwater table and/or the sea, a lake, a river, and/or an artesian well, and two upper tanks (B', B") are operatively set in series with respect to one another (Figures 6, 8, 9, 10, 11, 12).

5. The plant according to Claim 2, **characterized in that** it comprises a number of water tanks (A, B', B", B''', B""), at least one of which underlying (A), with intake of primary water from a groundwater table and/or the sea, a lake, a river, and/or an artesian well, and a plurality of overlying water tanks (B', B", B''', B"") set operatively in parallel with respect to one another (Figures 7, 10).

6. The plant according to Claim 2, **characterized in that** it comprises a number of water tanks (A, B', B", B'''), at least one of which underlying (A), with intake of primary water from a groundwater table and/or the sea, a lake, a river, and/or an artesian well, and a plurality of overlying water tanks (B', B"), operatively set with respect to one another in series in tower fashion (Figures 8, 9, 11, 12) with stepwise cascade system degrading from above down.

7. The plant according to Claim 2, **characterized in that** it comprises a number of water tanks (A, B', B", B''', B""), at least one of which underlying (A), with intake of primary water from a groundwater table and/or the sea, a lake, a river, and/or an artesian well, and a plurality of overlying double water tanks (B', B", B"', B"") set in castelet fashion, in pairs operatively in series and in parallel with respect to one another (Figure 10).

8.  The plant according to one or more of Claims 2 to 7, **characterized in that** it comprises a number of water tanks (A, B', B", B"', B"'), at least one of which underlying (A) and at least one overlying (B', B" B"', B"") and **in that** it is provided with a recovery tank (Vrip), which is set above the underlying tank (A) and is supplied with water of said underlying tank (A), whilst from said recovery tank (Vrip) water is fed to at least one overlying tank (B') (Figures 11, 12).

9.  A process for the production of electrical energy in the hydroelectric power plant according to one or more of the preceding claims, comprising at least one bottom tank (A) and at least one top tank (B), between which there exists a waterfall according to a difference in level (H1), in which a corresponding turbine (T) operates, which converts the kinetic energy of the water into mechanical energy and, via an alternator, into electrical energy, whilst the water is discharged freely and/or by means of a diffuser, into said bottom tank (A), said process being **characterized in that** at least one set of electric pumps (P) is supplied electrically by means of the electrical energy produced starting from said turbine (T) and pumps a volume of water ($m^3/s$) from said bottom tank (A) to said top tank (B), whilst from the same top tank (B), through said turbine (T), substantially the same volume (same amount) of water ($m^3/s$) by gravity and/or by means of a diffuser is processed by the turbine (T) and discharged freely and/or by means of a diffuser, into said bottom tank (A) so that a repetitive cycle (ABA) is performed, in which there is always substantially recycled the same volume of water ($m^3/s$) so that substantially the same volume of water ($m^3/s$) is processed simultaneously and continuously by the turbine (T) and discharged, by gravity, from above downwards, from the top tank (B) to the bottom tank (A), whilst simultaneously and continuously, substantially the same volume of water ($m^3/s$) is pumped from the bottom tank (A) into the top tank (B), according to a renewable continuous-loop cycle (ABA), whilst the possible higher energy requirement of said set of electric pumps is supplied, when necessary, by external means of electric-power supply.

10. The process according to the preceding claim, **characterized in that,** at least in a plant of small size and during at least one step of the operating cycle, said process is performed in a self-supplying way, according to the following energy relation:

$$\text{QuEEP} > \text{QuEEC} \ (\text{QuEEP greater than QuEEC}) \qquad [1]$$

where:

QuEEP is the amount of electrical energy produced by the turbine or turbines,
QuEEC is the amount of electrical energy consumed by the set or sets of electric pumps,

according to the following complementary measurements:

$$H \ = \ m, \ P \ = \ m^3/s, \ T \ = \ m^3/s, \ P \ = \ T.$$

11. The process according to Claim 9 and/or Claim 10, **characterized in that** substantially the same volume of water is always used as raw material, which is available everywhere and non-polluting, whilst consumption and storage of said raw material have an extremely low cost.

12. The process according to one or more of Claims 9 to 11, **characterized in that** there is always substantially recycled the volume of water ($m^3/s$) pumped by said pumping means (P) and processed and discharged ($m^3/s$) by said turbine means (T) simultaneously and continuously, where the capacities ($m^3/s$) of said means (P, T) are equal, a fact that improves the technological features, efficiency levels, safety, functionality, duration, costs, plant management so that it is not necessary to store large amounts of raw material, unlike the systems functioning with solid, liquid, and gas fuels, with consequent maximum safety of the plant.

13. The process according to one or more of Claims 9 to 12, **characterized in that** equipment, turbines and pumps are used that are non-polluting and have been in use for over a century and provide maximum guarantees in terms of safety, duration, running, regularity, and continuity of operation, management, maintenance, repair, in a plant of small size that in the event of calamity presents minimal environmental risk.

14. The process according to one or more of Claims 9 to 13, **characterized in that** it is able to operate indifferently either with feedwater at a low temperature (+1°C) or at the current summer temperatures, the temperature of the water remaining constant during each cycle.

15. The process according to one or more of Claims 9 to 14, **characterized in that** the renewable continuous-loop cycle functioning with water, unlike solar and wind-power systems, does not depend, as regards its yield, upon the climate, upon variations in the climate, the difference of yield between night and day, or upon wind intensity, but is constant, regular, safe, regulatable and non-polluting, without any $CO_2$ emissions.

16. The process according to one or more of Claims 9 to 15, **characterized in that** its implementation does not entail regulations, controls, micro- and/or miniaturized automatic mechanisms, complex, sophisticated regulations and/or high-technology regulations before, during and after the cycle so that its implementation is safe, simple, convenient, elementary.

17. The process according to one or more of Claims 9 to 16, **characterized in that** it is implemented in a modular plant for increasing the production of electricity.

18. The process according to one or more of Claims 9 to 17, **characterized in that** the volume of water ($m^3$/s) pumped by said pumping means (P) is greater by an extremely small percentage amount, from 1.5% to 2.0%, than the volume of water ($m^3$/s) processed and discharged by said turbine means (T) so that the water head (H = m) over the turbine means is constant, whilst the possible small surpluses between the functional values of said means (P, T) are regulated and compensated for by a system of overflow that from the top tank (B), by gravity, sends the minimal surpluses back into the bottom tank (A) so that the system remains in equilibrium and the levels in said tanks (A, B) are constant with a water head (H = m) on the turbine means (T) that is always regular and constant.

*Fig. 1*

Fig.2

Fig. 3

Fig. 4

*Fig. 5*

*Fig. 6*

Fig. 7

Fig. 8

Fig. 9

Fig. 10

Fig. 11

_Fig. 12_